# FASCICULE DE BREVET EUROPEEN

(11) **EP 0 659 642 B1**
(45) Date de publication et mention de la délivrance du brevet: **11.03.1998**
(21) Numéro de dépôt: 94402940.4
(22) Date de dépôt: 20.12.1994
(51) Int. Cl.: B64D 25/04

(54) **Siège d'aéronef et notamment de giravion, à dispositif d'absorption d'énergie automatiquement ajustable en fonction de la taille de l'occupant**
Flugzeugsitz insbesondere für einen Drehflügler mit abhängig vom Gewicht des Fluggastes selbsttätig regelbarer energieabsorbierender Vorrichtung
Aircraft seat and in particular a rotorcraft seat with an energy absorbing device automatically adjustable in terms of the passenger weight

(30) Priorité: 22.12.1993 FR 9315467
(43) Date de publication de la demande: 28.06.1995
(73) Titulaire: AEROSPATIALE Société Nationale Industrielle, 75781 Paris Cédex 16 (FR)
(72) Inventeur: Kerdoncuff, Ronan, F-17137 Nieul sur Mer (FR); Martin, Gabriel, F-17620 Echillais (FR)
(74) Mandataire: Dubois-Chabert, Guy

(56) Documents cités:
- FR-A- 1 197 117
- US-A- 3 985 388
- US-A- 4 702 353

## Description

L'invention concerne un siège d'aéronef, et notamment de giravion, équipé de moyens d'absorption d'énergie dont la composante verticale est ajustée automatiquement lors du réglage en hauteur du siège.

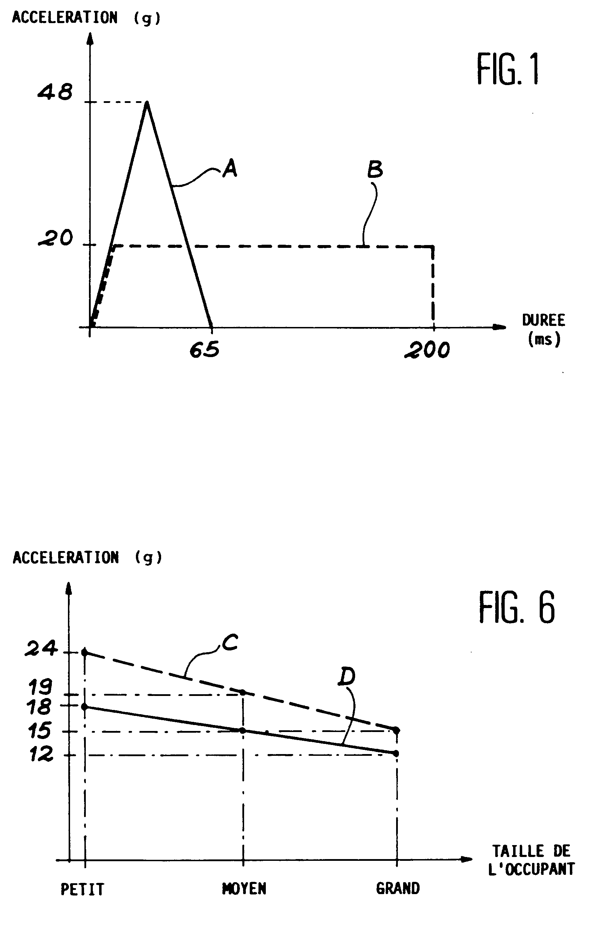

Lors d'un accident d'hélicoptère, les sièges tels que le siège du pilote sont soumis à un pic d'accélération vers le bas dont le profil le plus probable est celui d'un pic triangulaire correspondant à une accélération maximale de 48 g et à une durée de 65 ms, comme on l'a représenté en trait plein (courbe A) sur la figure 1.

On a aussi représenté en traits discontinus (courbe B) sur la figure 1 le profil d'accélération maximal vers le bas que peut supporter un être humain sans subir de liaison grave. Ce profil correspond à une accélération d'environ 20 g pendant environ 200 ms.

La comparaison de la courbe A en trait plein et de la courbe B en traits discontinus sur la figure 1 fait apparaître que la sauvegarde de l'occupant d'un siège d'hélicoptère en cas d'accident ne peut être obtenue qu'en autorisant un déplacement vertical contrôlé du baquet du siège, dans lequel est reçu l'occupant, par rapport au bâti servant à fixer le siège sur le plancher. Ce déplacement est contrôlé par des moyens d'absorption d'énergie qui supportent une partie du choc, de telle sorte que l'accélération verticale effectivement subie par l'occupant reste dans des limites acceptables.

Par ailleurs, dans le cas d'un siège de pilote, des moyens de réglage en hauteur du baquet par rapport au bâti sont également prévus, afin que les yeux du pilote se trouvent toujours à une hauteur convenable, quelle que soit sa taille.

Dans la pratique et comme l'illustre notamment le document US-A-3 985 388, les moyens d'absorption d'énergie et les moyens de réglage en hauteur sont généralement incorporés dans une structure de liaison entre le baquet et le bâti du siège. Plus précisément, les moyens de réglage en hauteur du baquet du siège agissent sur ce baquet au travers des moyens d'absorption d'énergie, de telle sorte que les caractéristiques de ces moyens d'absorption d'énergie restent inchangés lorsqu'on règle la hauteur du baquet.

Par ailleurs, la disposition en série des moyens de réglage du baquet en hauteur et des moyens d'absorption d'énergie dans la structure de liaison qui relie le baquet au bâti impose de limiter le déplacement vertical des moyens d'absorption d'énergie à la distance minimale qui sépare le baquet du plancher lorsque le baquet occupe sa position la plus basse. Les moyens d'absorption d'énergie sont donc habituellement dimensionnés pour qu'en cas d'accident, l'accélération verticale transmise à un occupant lourd soit totalement absorbée sur le déplacement vertical ainsi limité.

Cependant, cette disposition classique conduit à pénaliser fortement en accélération un occupant léger. En effet, lorsqu'on utilise des moyens d'absorption d'énergie classiques, à effort constant, un occupant lourd supporte une accélération relativement faible et provoque un grand déplacement, alors qu'au contraire un occupant léger est soumis à une forte accélération et ne provoque qu'un petit déplacement.

Pour remédier à ces inconvénients, et comme l'illustre le document US-A-4 408 738, on a imaginé de remplacer les moyens d'absorption d'énergie classiques, à effort constant, par des moyens d'absorption d'énergie à effort réglable. Le réglage de l'effort est effectué par un appareil électromécanique qui est sensible à la corpulence de l'occupant, celle-ci étant déterminée par l'allongement d'une ceinture réglable fixée autour de son torse.

Si l'agencement décrit dans le document US-A-4 408 738 permet en principe d'appliquer à tout occupant une accélération verticale sensiblement uniforme quelle que soit sa corpulence, il s'agit d'un dispositif complexe et coûteux. En effet ce dispositif nécessite la présence de capteurs sur la ceinture du siège, l'utilisation d'un dispositif électromécanique complexe et le recours à des moyens d'absorption d'énergie à effort variable.

L'invention a précisément pour objet un siège d'aéronef dont la conception originale permet de modifier, en fonction de la taille de l'occupant, l'effort de retenue exercé sur ce dernier par les moyens d'absorption d'énergie en cas d'accident, afin que l'occupant soit soumis à une accélération verticale sensiblement uniforme quelle que soit sa taille, au moyen d'un mécanisme particulièrement simple n'utilisant ni capteur, ni moyen d'absorption d'énergie à effort variable.

Conformément à l'invention, ce résultat est obtenu au moyen d'un siège d'aéronef, comprenant un baquet apte à recevoir un occupant, un bâti fixé au plancher de l'aéronef, et une structure de liaison entre le baquet et le bâti, incorporant des moyens de réglage du baquet en hauteur et des moyens d'absorption d'énergie, exerçant un effort de retenue sur le baquet, caractérisé par le fait que les moyens de réglage agissent sur les moyens d'absorption d'énergie pour en modifier l'inclinaison, de telle sorte que la composante verticale de l'effort de retenue varie en sens inverse de la distance séparant le baquet du plancher, lors d'un actionnement des moyens de réglage.

Du fait que les moyens de réglage en hauteur du baquet du siège ont également pour effet de modifier l'inclinaison des moyens d'absorption d'énergie, la composante verticale de l'effort de retenue appliqué sur l'occupant en cas d'accident est plus importante pour un occupant de petite taille que pour un occupant de grande taille. Or, des statistiques effectuées sur des populations de pilotes ont montrées que leur poids varie dans le même sens que leur taille. Le siège selon l'invention permet donc bien de soumettre les occupants, en cas d'accident, à une accélération qui reste dans des limites humainement acceptables, quel que soit leur poids.

Dans une forme de réalisation préférentielle de l'invention, les moyens d'absorption d'énergie exercent sur le baquet un effort de retenue constant, sans nécessiter d'autre réglage que celui de la hauteur du baquet.

Dans cette même forme de réalisation de l'invention, les moyens d'absorption d'énergie comprennent au moins une paire d'absorbeurs d'énergie disposés sensiblement symétriquement par rapport à un plan vertical médian du siège, les premières extrémités des absorbeurs de chaque paire étant séparées par une distance constante, alors que les autres extrémités de ces absorbeurs sont séparées par une distance qui varie lors d'un actionnement des moyens de réglage.

Dans ce cas, le bâti comporte avantageusement deux guides latéraux parallèles sur lesquels le baquet est monté coulissant, les premières extrémités des absorbeurs de chaque paire étant articulées sur ces guides alors que les autres extrémités de ces absorbeurs sont reliées à un dossier du baquet par deux leviers articulés appartenant aux moyens de réglage, ces leviers étant symétriques par rapport au plan vertical médian du siège.

De préférence, chacun des leviers est articulé sur les autres extrémités des absorbeurs de chaque paire et sur une ferrure fixée sur le dossier.

Avantageusement, les moyens de réglage du baquet en hauteur comprennent des moyens de verrouillage du baquet dans une position déterminée.

Les leviers peuvent alors être articulés sur les absorbeurs à une première extrémité, sur la ferrure dans une partie centrale et sur une biellette de longueur variable incorporant les moyens de verrouillage, à leur deuxième extrémité.

De préférence, le siège comprend de plus des moyens de relevage automatique du baquet tendant à amener ce dernier dans sa position haute.

Ces moyens de relevage automatique du baquet sont avantageusement interposés entre les leviers.

On décrira à présent, à titre d'exemple non limitatif, une forme de réalisation préférentielle de l'invention en se référant aux dessins, dans lesquels :
- la figure 1, déjà décrite, représente respectivement, en fonction du temps (en ms), le pic d'accélération verticale A auquel est soumis un hélicoptère en cas d'accident (en trait plein) et l'accélération verticale maximale B supportable pour un être humain (en traits discontinus) ;
- la figure 2 est une vue de côté d'un siège d'aéronef conforme à l'invention ;
- la figure 3 est une vue de derrière du siège d'aéronef de la figure 2 ;
- la figure 4 est une vue comparable à la figure 3 représentant à plus grande échelle la structure de liaison entre le baquet et le bâti du siège dans la position occupée par cette structure lorsque le baquet du siège est en position haute (en trait plein) et en position basse (en traits mixtes) ;
- la figure 5 est une vue comparable à la figure 4 représentant, après un accident, l'état de la structure de liaison dans le cas où le baquet du siège occupait initialement une position haute (en trait plein) et dans le cas où ce même baquet occupait initialement une position basse (en traits mixtes) ; et
- la figure 6 représente en fonction de la taille de l'occupant, l'accélération (en g) subie en cas d'accident, dans le cas d'un siège de conception classique (en traits discontinus) et dans le cas du siège selon l'invention (en trait plein).

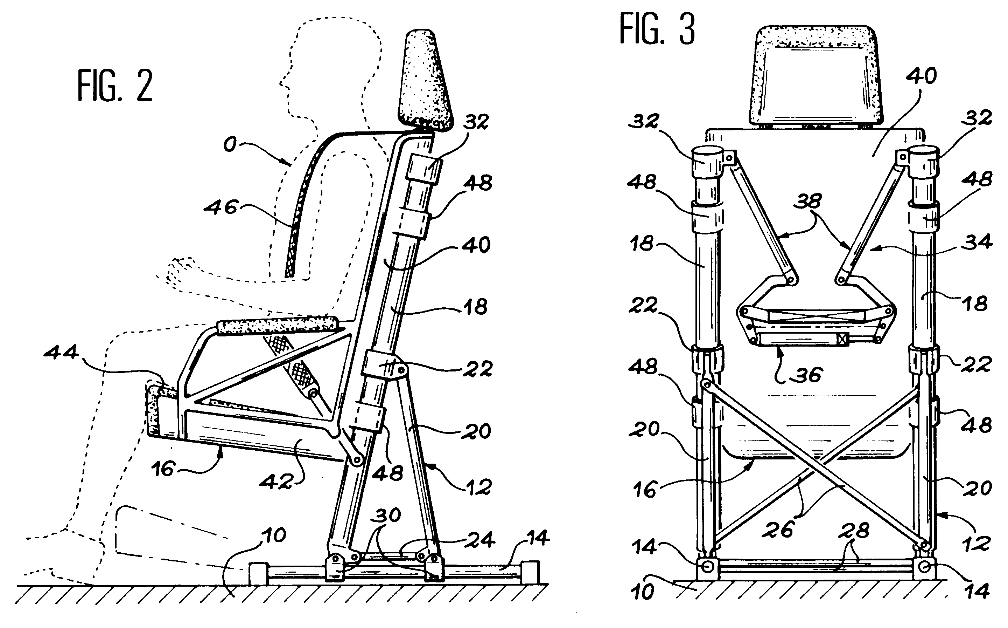

Les figures 2 et 3 représentent un siège de pilote conçu pour équiper un aéronef tel qu'un giravion, conformément à l'invention.

Sur ces figures, la référence 10 désigne le plancher de l'aéronef. Sur ce plancher est fixé un bâti du siège, désigné de façon générale par la référence 12, dont un exemple de réalisation va à présent être décrit.

Le bâti 12 est rigide et formé principalement de tubes et de tiges en aluminium assemblés entre eux par des parties usinées. Il est monté sur deux tubes 14 fixés au plancher 10 par leurs extrémités, de façon à pouvoir être bloqué sur ces tubes 14. Les tubes 14 sont disposés parallèlement à l'axe longitudinal de l'aéronef. Cet agencement permet donc de régler la position du siège selon cet axe.

Le bâti 12 supporte un baquet 16 constituant l'élément du siège dans lequel est reçu l'occupant. A cet effet, le bâti 12 comporte deux tubes 18 formant des guides latéraux qui assurent le guidage vertical du baquet 16. Ces tubes 18 sont disposés parallèlement l'un à l'autre au-dessus des tubes de guidage horizontal 14, à partir desquels ils s'étendent sensiblement verticalement vers le haut et légèrement vers l'arrière. A l'arrière de chacun des tubes 18 de guidage vertical, le bâti 12 comporte une contrefiche 20 constituée par une tige d'aluminium. Une pièce de liaison 22 sert à fixer l'extrémité haute de chacune des contrefiches 20 sur la partie centrale du tube 18 de guidage vertical correspondant.

Afin de rigidifier le bâti 12, l'extrémité basse de chaque tube 18 de guidage vertical est reliée à l'extrémité basse de la contrefiche 20 placée derrière ce tube par un tirant horizontal 24 placé au-dessus du tube 14 de guidage horizontal correspondant.

Afin d'éviter le vrillage et le basculement latéral du siège, le bâti 12 comprend de plus deux jeux de deux bielles en X. Un premier jeu de bielles en X 26 relie l'extrémité haute de chaque contrefiche 20 à l'extrémité basse de l'autre contrefiche. Un deuxième jeu de bielles en X 28 relie l'extrémité avant de chaque tirant 24 à l'extrémité arrière de l'autre tirant.

Enfin, quatre pièces de guidage 30, montées aux extrémités basses des tubes 18 de guidage vertical et des contrefiches 20, assurent le montage du bâti 12 sur les tubes 14 de guidage horizontal. Ces pièces de guidage incorporent des paliers à faible coefficient de friction assurant le coulissement du bâti le long des tubes 14 ainsi que des moyens de blocage permettant d'immobiliser le bâti dans la position désirée.

L'extrémité haute de chacun des tubes 18 de guidage vertical porte une ferrure 32 servant à l'accrochage d'une structure de liaison 34 par laquelle le baquet 16 est fixé sur le bâti 12. Cette structure de liaison 34, qui sera décrite en détail par la suite, incorpore de façon connue des moyens 36 de réglage du baquet 16 en hauteur et des moyens 38 d'absorption d'énergie.

Le baquet 16 du siège illustré sur les figures 2 et 3 comporte un dossier 40 solidaire d'une assise 42 supportant un coussin 44 sur lequel est assis l'occupant O. Ce dernier est immobilisé sur le baquet 16 par un harnais 46 comportant une ceinture ventrale, deux sangles d'épaule et un brin entrejambe.

Afin d'assurer le montage du baquet 16 sur le bâti 12 tout en autorisant un déplacement vertical du baquet, pour permettre son réglage en hauteur et l'absorption de l'énergie en cas d'accident, le dossier 40 du baquet 16 supporte, sur sa face arrière, deux paires de paliers 48. Chacune des paires de paliers 48 est montée de façon coulissante sur l'un des tubes 18 de guidage vertical.

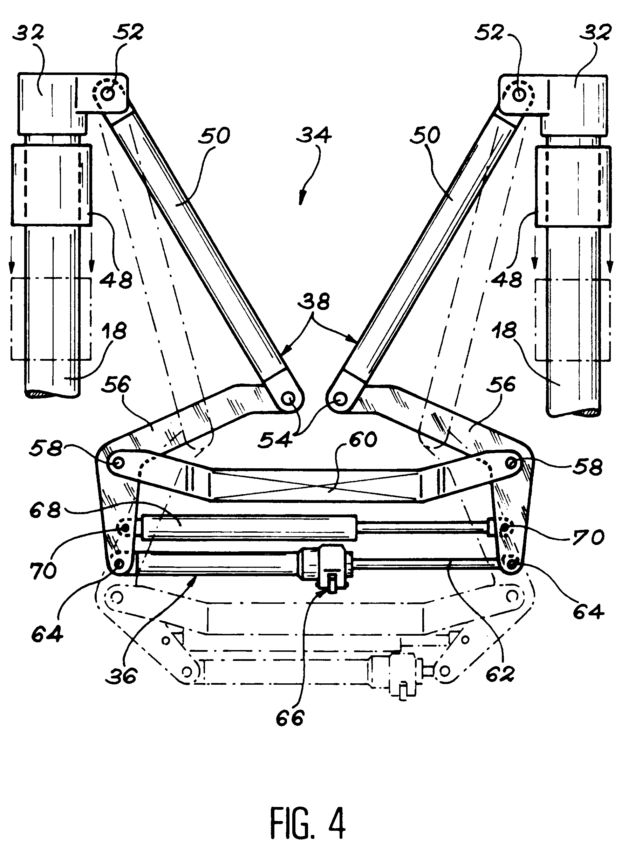

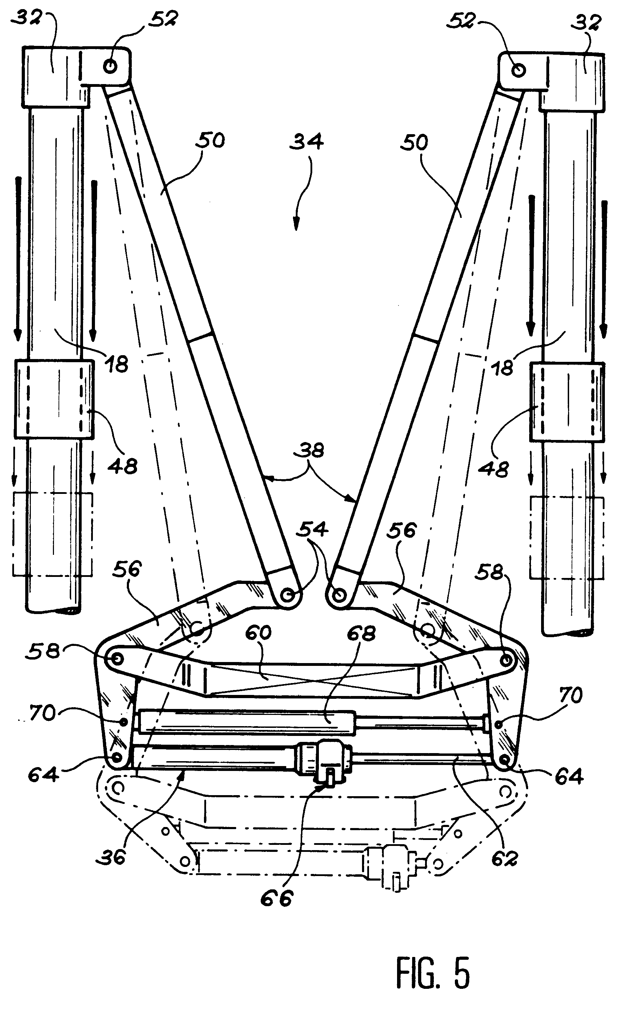

La structure de liaison 34 par laquelle le baquet 16 est fixé au bâti 12 va à présent être décrite en détail en se référant aux figures 4 et 5.

Comme l'illustrent ces deux figures, la structure de liaison 34 est symétrique par rapport à un plan vertical médian du siège. Elle est placée derrière le dossier 40, entre les tubes 18 de guidage vertical.

Dans la forme de réalisation illustrée, la structure de liaison 34 comporte deux absorbeurs d'énergie 50, disposés symétriquement par rapport au plan vertical médian du siège et formant les moyens 38 d'absorption d'énergie. Les absorbeurs d'énergie 50 sont identiques et exercent sur le baquet 16 du siège un effort de retenue constant. Ils peuvent être d'un type quelconque sans sortir du cadre de l'invention. Il s'agit généralement de mécanismes qui subissent une déformation permanente lors d'un accident provoquant leur allongement.

L'extrémité haute de chacun des absorbeurs d'énergie 50 est articulée par un axe 52 sur l'une des ferrures 32 montées à l'extrémité haute du tube 18 de guidage vertical correspondant. Plus précisément, les axes d'articulation 52 sont orientés perpendiculairement à un plan passant par les axes des tubes 18 et des absorbeurs d'énergie 50. L'écartement entre les extrémités hautes des absorbeurs d'énergie 50 est donc constant et déterminé par la distance qui sépare les axes d'articulation 52.

A leur extrémité basse, chacun des absorbeurs d'énergie 50 est articulé par un axe 54 à l'extrémité haute d'un levier 56 en forme de V. Les axes de pivotement 54 sont orientés parallèlement aux axes de pivotement 52 et les leviers 56 sont situés dans un plan parallèle au plan contenant les axes des tubes 18 de guidage vertical et des absorbeurs d'énergie 50.

Dans leur partie centrale correspondant à la pointe du V, les leviers 56 sont articulés par un axe de pivotement 58 sur une ferrure commune 60 fixée derrière le dossier 40 du baquet 16. Les axes de pivotement 58 sont parallèles aux axes de pivotement 52 et 54. Les leviers sont disposés symétriquement par rapport au plan vertical médian du siège et la pointe des V formés par ces leviers est tournée vers l'extérieur.

Les extrémités basses des leviers 56 sont reliées par une biellette 62. Plus précisément, les extrémités de la biellette 69 sont articulées sur les leviers 56 par des axes de pivotement 64 parallèles aux axes de pivotement 52, 54 et 58. La biellette 62 est de longueur variable et réglable. Elle incorpore un verrou 66 dont le blocage permet de maintenir la longueur de la biellette à une valeur déterminée.

La biellette 62 forme ainsi les moyens 36 de réglage en hauteur du baquet 16 du siège. En effet, lorsqu'on augmente la longueur cette biellette 62 vers sa valeur maximale, comme illustrée en trait plein sur la figure 4, les leviers 56 pivotent autour de leurs axes de pivotement 58 dans le sens correspondant à l'écartement de leurs extrémités basses articulées sur la biellette 62. Compte tenu de la forme en V des leviers 56, ce pivotement a pour conséquence une réduction de la distance verticale séparant les extrémités hautes des leviers 56 de la ferrure 60, ainsi qu'un rapprochement de ces extrémités.

Etant donné que la longueur des absorbeurs d'énergie 50 reste constante dans des conditions normales de vol et que les extrémités hautes de ces absorbeurs d'énergie sont articulées sur les ferrures 32 du bâti, un allongement de la biellette 62 se traduit donc par une montée de la ferrure 60 et du baquet 16 sur lequel cette ferrure est fixée. L'état d'allongement maximal de la biellette 62 illustré en trait plein sur la figure 4 correspond donc à l'occupation du siège par une personne de petite taille.

A l'inverse, lorsque la biellette 62 est raccourcie vers sa valeur minimale, illustrée en traits mixtes sur la figure 4, le rapprochement des extrémités basses des leviers 56 fait pivoter ces leviers autour de leurs axes de pivotement 58 de telle sorte que leurs extrémités hautes tendent à s'écarter de la ferrure 60 et à s'éloigner l'une de l'autre. La distance verticale séparant les ferrures 32 et 60 est ainsi augmentée, ce qui se traduit par un abaissement du baquet 16 et correspond à l'occupation du siège par une personne de grande taille.

Dans la structure de liaison 34 conforme à l'invention, les absorbeurs d'énergie 50 se comportent donc comme des biellettes articulées dont l'inclinaison varie en fonction de la longueur donnée à la biellette 62. Plus précisément, on voit sur la figure 4 que l'inclinaison des absorbeurs d'énergie 50 est maximale lorsque le baquet 16 occupe sa position haute illustrée en trait plein et qu'elle est minimale lorsque le baquet occupe sa position basse illustrée en traits mixtes.

La composante verticale de l'effort de retenue exercé par les absorbeurs d'énergie sur le baquet 16 est donc d'autant plus grande que la position occupée par le baquet 16 est basse. En d'autres termes, la composante verticale de l'effort de retenue varie en sens inverse de la distance séparant le baquet 16 du plancher 10, lorsque les moyens 36 de réglage en hauteur de ce baquet sont actionnés.

La figure 5 illustre la structure de liaison 34 de la figure 4 après un accident, dans le cas où le baquet 16 se trouvait initialement en position haute (en trait plein) et dans le cas où le baquet se trouvait initialement en position basse (en traits mixtes).

Quelle que soit la position initiale du baquet 16, la partie basse de la structure de liaison 34 constituée par les leviers 56, la ferrure 60 et la biellette 62 ne subit aucune déformationlors d'un crash puisque la longueur de la biellette 62 reste bloquée à la valeur réglée initialement par l'occupant à l'aide du verrou 66. En revanche, l'accélération verticale vers le bas subie par le siège lorsque l'aéronef heurte le sol se traduit par un allongement des absorbeurs d'énergie 50, qui absorbent une partie du choc.

Sous l'effet de cet allongement et comme l'illustre la comparaison des figures 4 et 5, l'inclinaison des absorbeurs d'énergie 50 tend à diminuer au fur et à mesure de leur allongement. Par conséquent, quel que soit le réglage en hauteur initial du baquet 16 du siège, la composante verticale de l'effort de retenue appliqué sur ce baquet par les absorbeurs d'énergie 50 augmente lors de l'accident. L'accélération supportée par l'occupant, qui est directement proportionnelle à cet effort, augmente donc légèrement mais régulièrement lors de l'accident.

Cette caractéristique est favorable dans le cas d'une mauvaise utilisation du siège, c'est-à-dire lorsque le baquet est réglé en position haute pour un occupant lourd ou en position basse pour un occupant léger. En effet, les courses disponibles et les accélérations maximales supportées par les occupants restent ainsi compatibles, dans les deux cas, avec les exigences de survie de ces occupants.

Comme l'illustrent également les figures 4 et 5, la structure de liaison 34 comprend aussi des moyens de relevage automatique du baquet 16, constitués par un dispositif 68 placé horizontalement entre la ferrure 60 et la biellette 62 et dont les extrémités sont articulées par des axes 70 sur les leviers 56. Les axes 70 sont parallèles aux axes de pivotement 52, 54, 58 et 64. Le dispositif 68 peut être constitué par tout dispositif à ressort (gaz, métal ou autre) exerçant en permanence sur les leviers 56 une force tendant à écarter les axes 70.

Lorsque le verrou 66 est relâché, le dispositif 68 a ainsi pour effet de faire pivoter les leviers 56 autour de leurs axes de pivotement 58 pour ramener automatiquement le baquet 16 du siège dans la position haute illustrée en trait plein sur la figure 4. Pour régler la hauteur du baquet 16, l'occupant n'a donc plus qu'à abaisser celui-ci jusqu'au niveau désiré, à l'encontre de ce dispositif 68, puis à bloquer la biellette 62 à l'aide du verrou 66 pour préserver le réglage ainsi effectué.

Bien entendu, l'invention n'est pas limitée à la forme de réalisation qui vient d'être décrite en se référant aux figures 2 à 5. Ainsi, on comprendra notamment que les moyens 38 d'absorption d'énergie peuvent comprendre plusieurs paires d'absorbeurs d'énergie analogues aux absorbeurs 50. De même, le mécanisme permettant d'effectuer le réglage en hauteur du baquet 16 peut être différent de celui qui a été décrit sans sortir du cadre de l'invention. Enfin, le changement d'inclinaison des absorbeurs, lors d'un actionnement des moyens de réglage en hauteur du baquet, peut se faire dans deux plans distincts quelconques.

La figure 6 représente l'accélération (en g) subie par l'occupant d'un siège de giravion de conception classique, tel que décrit dans le document US-A-3 985 388 (courbe C en traits discontinus) et par l'occupant d'un siège conforme à l'invention (courbe D en trait plein), en fonction de la taille de l'occupant.

Comme on l'a indiqué précédemment, en cas d'accident, le siège de conception classique (courbe C) fait subir aux occupants de petite taille des accélérations élevées (jusqu'à 25 g), qui dépassent le seuil que peut normalement supporter un être humain sans subir de lésion grave (voir la courbe B de la figure 1).

Au contraire, le siège selon l'invention (courbe D) permet de ne jamais appliquer à son occupant, en cas d'accident, une accélération supérieure au seuil humainement admissible, quelle que soit la taille de cet occupant.

Il est à noter que la gamme des tailles, et donc des poids, couverte par le siège selon l'invention peut être décalée en changeant les absorbeurs d'énergie 50, par exemple si l'on désire ajouter un blindage sur le baquet 16.

Par ailleurs, la gamme des tailles, et donc des poids, peut être élargie en modifiant les dimensions respectives des différentes pièces formant la structure de liaison 34 entre le baquet 16 et le bâti.

Les deux modifications évoquées aux paragraphes précédents ont aussi pour conséquence de modifier la valeur du pic d'accélération susceptible d'être absorbé par le siège.

## Revendications

1. Siège d'aéronef, comprenant un baquet (16) apte à recevoir un occupant (O), un bâti (12) fixé au plancher (10) de l'aéronef, et une structure de liaison (34) entre le baquet et le bâti, incorporant des moyens de réglage (36) du baquet en hauteur et des moyens (38) d'absorption d'énergie, exerçant un effort de retenue sur le baquet, caractérisé par le fait que les moyens de réglage (36) agissent sur les moyens (38) d'absorption d'énergie pour en modifier l'inclinaison, de telle sorte que la composante verticale de l'effort de retenue varie en sens inverse de la distance séparant le baquet (16) du plancher (10), lors d'un actionnement des moyens de réglage (36).

2. Siège d'aéronef selon la revendication 1, caractérisé par le fait que les moyens (38) d'absorption d'énergie exercent sur le baquet (16) un effort de retenue constant.

3. Siège d'aéronef selon l'une quelconque des revendications 1 et 2, caractérisé par le fait que les moyens d'absorption d'énergie (38) comprennent au moins une paire d'absorbeurs d'énergie (50) disposés sensiblement symétriquement par rapport à un plan vertical médian du siège, des premières extrémités de chaque paire étant séparées par une distance constante, alors que les autres extrémités de ces absorbeurs sont séparées par une distance qui varie lors d'un actionnement des moyens de réglage (36).

4. Siège d'aéronef selon la revendication 3, caractérisé par le fait que le bâti (10) comporte deux guides latéraux parallèles (18) sur lesquels le baquet (16) est monté coulissant, les premières extrémités des absorbeurs (50) de chaque paire étant articulées sur ces guides, alors que les autres extrémités de ces absorbeurs sont reliées à un dossier (40) du baquet (16) par deux leviers articulés (56) reliés aux moyens de réglage (36), ces leviers (56) étant symétriques par rapport audit plan vertical médian.

5. Siège d'aéronef selon la revendication 4, caractérisé par le fait que chacun des leviers (56) est articulé sur les autres extrémités des absorbeurs (50) de chaque paire et sur une ferrure (60) fixée sur le dossier (40).

6. Siège d'aéronef selon l'une quelconque des revendications précédentes, caractérisé par le fait que les moyens de réglage (36) comprennent des moyens (66) de verrouillage du baquet (16) dans une position déterminée.

7. Siège d'aéronef selon les revendications 5 et 6 combinées, caractérisé par le fait que les leviers (56) sont articulés sur les absorbeurs (50) à une première extrémité, sur la ferrure (60) dans une partie centrale et sur une biellette (62) de longueur variable, incorporant les moyens de verrouillage (66), à leur deuxième extrémité.

8. Siège d'aéronef selon l'une quelconque des revendications précédentes, caractérisé par le fait qu'il comprend de plus des moyens (68) de relevage automatique du baquet (16).

9. Siège d'aéronef selon la revendication 8, combinée avec l'une quelconque des revendications 5 à 7, caractérisé par le fait que les moyens (68) de relevage automatique du baquet sont interposés entre les leviers (56).

## Claims

1. Aircraft seat, incorporating a pan (16) able to receive an occupant (O), a frame (12) fixed to the aircraft floor (10), and a connecting structure (34) between the pan and the frame, incorporating pan height regulating means (36) and energy absorption means (38), exerting a retaining force on the pan, characterized in that the regulating means (36) act on the energy absorption means (38) in order to modify the inclination thereof, in such a way that the vertical component of the retaining force varies in the reverse sense to the distance separating the pan (16) from the floor (10), during an actuation of the regulating means (36).

2. Aircraft seat according to claim 1, characterized in that the energy absorption means (38) exert a constant retaining force on the pan (16).

3. Aircraft seat according to claim 1 or 2, characterized in that the energy absorption means (38) comprise at least one pair of energy absorbers (50) arranged substantially symmetrically with respect to a median vertical plane of the seat, first ends of each pair being separated by a constant distance, whereas the other ends of said absorbers are separated by a distance varying during an actuation of the regulating means (36).

4. Aircraft seat according to claim 3, characterized in that the frame (10) has two parallel, lateral guides (18) on which the pan (16) is mounted in sliding manner, the first ends of the absorbers (50) of each pair being articulated to said guides, whereas the other ends of said absorbers are connected to a back (40) of the pan (16) by two articulated levers (56) connected to the regulating means (36), said levers (56) being symmetrical relative to said median vertical plane.

5. Aircraft seat according to claim 4, characterized in that levers (56) are articulated to the other ends of the absorbers (50) of each pair and to a fitting (60) fixed to the back (40).

6. Aircraft seat according to any one of the preceding claims, characterized in that the regulating means (36) comprise means (66) for locking the pan (16) in a given position.

7. Aircraft seat according to claims 5 and 6 combined, characterized in that the levers (56) are articulated to a first end of the absorbers (50), to a central portion of the fitting (60) and to a variable length link (62), incorporating the locking means (66), at their second end.

8. Aircraft seat according to any one of the preceding claims, characterized in that means (68) for automatically raising the pan (16) are provided.

9. Aircraft seat according to claim 8 combined with any one of the claims 5 to 7, characterized in that the automatic pan raising means (68) are interposed between the levers (56).

## Patentansprüche

1. Flugzeugsitz, einen Schalensitz (16) zur Aufnahme einer Person (O), ein auf dem Boden (10) des Flugzeugs befestigtes Gestell (12) und eine Verbindungsstruktur (34) zwischen dem Schalensitz und dem Gestell umfassend, in die Höheneinstelleinrichtungen (36) des Schalensitzes und Energieabsorptionseinrichtungen (38) integriert sind, die auf den Schalensitz eine Haltekraft ausüben,
**dadurch gekennzeichnet,**
daß die Einstelleinrichtungen (36) auf die Energieabsorptionseinrichtungen (38) wirken, um deren Neigung zu verändern, so daß die Vertikalkomponente der Haltekraft bei einer Betätigung der Einstelleinrichtungen (36) sich in umgekehrter Richtung bezüglich des Abstands verändert, der den Schalensitz (16) vom Boden (10) trennt.

2. Flugzeugsitz nach Anspruch 1, dadurch gekennzeichnet, daß die Energieabsorptionseinrichtungen (38) auf den Schalensitz (16) eine konstante Haltekraft ausüben.

3. Flugzeugsitz nach einem der Ansprüche 1 und 2, dadurch gekennzeichnet, daß die Energieabsorptionseinrichtungen (38) wenigstens ein Paar Energieabsorber (50) umfassen, im wesentlichen symmetrisch angeordnet in bezug auf eine vertikale Mittelebene des Sitzes, wobei erste Enden jedes Paares durch einen konstanten Abstand getrennt sind, während die anderen Enden dieser Absorber durch einen Abstand getrennt sind, der sich bei einer Betätigung der Einstelleinrichtungen (36) verändert.

4. Flugzeugsitz nach Anspruch 3, dadurch gekennzeichnet, daß das Gestell (10) zwei parallele seitliche Führungen (18) umfaßt, auf die der Schalensitz (16) gleitend montiert ist, wobei die ersten Enden der Absorber (50) jedes Paares an diesen Führungen angelenkt sind, während die anderen Enden dieser Absorber mit der Lehne (40) des Schalensitzes (16) verbunden sind, durch zwei mit den Einstelleinrichtungen (36) verbundene Gelenkhebel (56), wobei diese Hebel (56) symmetrisch sind in bezug auf die genannte Mittelebene.

5. Flugzeugsitz nach Anspruch 4, dadurch gekennzeichnet, daß jeder der Hebel (56) an den anderen Enden der Absorber (50) jedes Paares und an einem Verbinder (60) angelenkt ist, der an der Lehne (40) befestigt ist.

6. Flugzeugsitz nach einem der vorangehenden Ansprüche, dadurch gekennzeichnet, daß die Einstelleinrichtungen (36) Verriegelungseinrichtungen (66) des Schalensitzes (16) in einer bestimmten Stellung umfassen.

7. Flugzeugsitz nach einem der Ansprüche 5 und 6 kombiniert, dadurch gekennzeichnet, daß die Hebel (56) an den Absorbern (50) mit einem ersten Ende, an dem Verbinder (60) in einem Mittelteil und an einer Stange (62) von veränderlicher Länge, kombiniert mit den Verriegelungseinrichtungen (66), mit ihrem zweiten Ende angelenkt sind.

8. Flugzeugsitz nach einem der vorangehenden Ansprüche, dadurch gekennzeichnet, daß er außerdem Einrichtungen (68) zum automatischen Höherstellen des Schalensitzes (16) umfaßt.

9. Flugzeugsitz nach Anspruch 8, kombiniert mit einem der Ansprüche 5 bis 7, dadurch gekennzeichnet, daß die automatischen Höherstelleinrichtungen (68) des Schaltensitzes zwischen die Hebel (56) eingefügt sind.
